# EUROPEAN PATENT SPECIFICATION

(11) **EP 0 621 890 B1**
(45) Date of publication and mention of the grant of the patent: **19.06.1996**
(21) Application number: 93901885.9
(22) Date of filing: 07.12.1992
(51) Int. Cl.: C09D 5/02

(54) **MULTIPURPOSE, ECOLOGICAL WATER-PAINT**
ÖKOLOGISCHE ALLZWECKFARBE AUF WASSERBASIS
PEINTURE AQUEUSE UNIVERSELLE ET ECOLOGIQUE

(30) Priority: 16.01.1992 IT LE92000
(43) Date of publication of application: 02.11.1994
(73) Proprietor: LABORATORI ECOBIOS S.R.L., I-73033 Corsano (IT)
(72) Inventor: BLEVE, Donato, Luigi, I-73033 Corsano (IT); DE-FRANCESCO, Francesco, I-73033 Corsano (IT); CIARDO, Fernando, I-73033 Corsano (IT)
(86) International application number: PCT/IT92/00159
(87) International publication number: WO 93/14165

(56) References cited:
- US-A- 2 773 850
- DATABASE WPIL Week 8814, 29 February 1988 Derwent Publications Ltd., London, GB; AN 095991
- DATABASE WPIL Week 8521, 11 April 1985 Derwent Publications Ltd., London, GB; AN 125342

## Description

### Technical Field

The present invention relates to a new and original water-paint, in liquid form: a milky emulsion (pasteurized whole milk or powdered milk diluted in water) containing low amount of water and comprising minerals, acetic acid solutions and other components. Said water-paint, more than other similar products on the market, having bactericidal, fireproof, transpiring, ecologic, isolating, desalting properties is suitable for manifactured building articles, wood, metals and plastics. Coatings is, in general, the field of application of the present invention.

A normal varnish is usually a solution and/or a suspension of variable consistency, with or without coloring pigments, characterized by the fact that upon application on whichever object it forms, on drying, a tough, resistant film with protective properties. The varnish consists of a liquid vehicle in which coloring components, in case of a colored paint, and various additives are suspended. The liquid vehicle once composed of oils, is nowadays composed of synthetic resins obtained through polymerization or polycondensation. Solvents or thinners (alcohol, esters, etc.) are the binding elements. Peculiar characteristics are given to the paint by substances called additives among which driers, suspending elements, plasticizers etc. are to be mentioned. In particular, the group of plasticizers, as an integral part of the film, improves elasticity and flexibility.

### Disclosure of the Invention

The present invention is characterized by its new original composition whose advantages are not easily found in common coatings. The fundamental principle of the present invention is that the milk (whole pasteurized milk or powdered milk) allows to amalgamate in a solution with a low amount of water the following elements:
a) minerals as calcium sulfate also in form of powdered stucco; litophone or a mixture of barium sulfate and zinc sulphide; silicon oxide; calcium oxide; calcium carbonate; calcium hydroxide; cement; talc and all alkaline - earth minerals;
b) aqueous solution of acetic acid obtained with wine, beer, cider and other slightly alcoholic liquids through distillation and synthesis processes with a percentage of 6 to 15% acetic acid;
c) wood (wood shavings);
d) polyacrylic and polyurethan products;
e) polysaccharides having either a mechanical function (cellulose, chitin) or a thickening function (wheat flour, oatmeal, corn meal, bonemeal, fishmeal, beet sugar and cane sugar, fructose, saccharose and dextrose);
f) drying oils like hempseed oil, linseed oil and tung oil mainly composed by glycerides of unsatured fatted acid charged with lead oxides, zinc oxides and manganese oxides or cobalt, lead and manganese resinates obtained by fusion with colophony;
g) essential oils as fruits, flowers, leaves and wood oils obtained by organic solvents;
h) pigments as oxides, bioxides and soil;
i) bleaching agents with both oxidizing and reducing properties;

The emulsion of the said components is achieved by centrifugation starting with the following basic components: milk, vinegar, calcium hydroxide (slaked lime), lithopone and powdered stucco.

Aim of the described water-paint is the protection of whichever painted surface, horizontal or vertical, from mildew, hydroscopic salts, potassium nitrate efflorescence and other salts. It also acts as dehumidifier.

Another application of the said water-paint is the coating of walls in a good state so that they will be imperious to air and moisture.

A further application of the said invention is its employment as additive for mortars in a proportion of 20-30% for stucco and 50% for plaster.

The mentioned properties are achieved because the water-paint application on walls, for instance, causes a strong exothermic reaction of the acetic acid and the lactic acid on the calcium hydroxide producing water vapor; contemporary, the calcium sulphate, needed to be hydrated, absorbs the water of a humid wall or of ossidrilic basis of the salts in the walls. The desalting action is carried out by the lytophone, which through oxide reduction substitutes the hydroscopic salts; on the other hand, the water removal prevents the melting of corrosive hydroscopic salts and the formation of efflorescence both where there is water-paint and nearby it. The heat developed after the exothermic reaction causes the drying of mildew thus restoring the walls below. Another important role in the dehumidification action is played by the calcium sulphate which, having been emulsionated, has not stabilized with two water molecules. After the application of the water-paint this process produces a compacting effect of the paint on the wall.

### Ways of carrying out the invention

The water-paint is obtained by the following partial mixtures previously thoroughly amalgamated:
a) 13% powdered stucco with 6% pastereuzed whole milk and 2.5% vinegar in a solution with a low amount of water;
b) 13% lytophone and 3% pastourized whole milk and 2% vinegar in a solution with low amount of water;
c) 2% white cement in powder and water;
d) 2% titanium powder and water;
e) solution of 47% calcium hydroxide with low amount of water, and successively amalgamate 5% pastourized whole milk, water, and again 2% pastourized whole milk and 2.5% vinegar.

Mix successively solutions a), b), c) d) and e) and add a 1% pastourized whole milk and 1% vinegar. Solution e) can be used separately as semitransparent primer coat to treat surfaces from mildews, saltpetre and/or moisture. The combination of solutions b) lithopone (doubled), c) cement, d) titanium and e) calcium hydroxide, produces a water-paint which can be used as primer coat and has optimal transpiration, covering and pigmentation properties to paint manifactured building articles.

The quantities of the said water-paint components are summarised as follows: milk (10-17%), vinegar (6-8%), calcium hydroxide (46-72%) calcium sulphate (2-16%) and litophone (9-15%).

Moreover, the following components can be added to the water-paint by dispersion through centrifugation:
a) 0.15 in volume percentage essential oils to scent the paint;
b) pigments: 0.5 to 1% in volume percentage oxides; 3 to 6% in weight percentage bioxides and/or soil;
c) 5 to 15% in weight percentage white cement and/or talc and/or silicon to give a better mechanical resistance;
d) 4 to 6% in weight percentage polysaccharides to better the mechanical resistance and 1 to 3% in weight percentage addensing polysaccharides. To obtain stuccos, mortars and bonding agents suitable for filling, finishing, restoring and coating walls, wood, metals and plastic materials the following components should also be dispersed through centrifugation in the basic emulsion: 1 to 3% in weight polyurethan products; 2 to 4% in weight polyacrylic products; 2 to 6% drying oils; 1 to 3% bleaching agents; 2 to 5% wood shavings.

### Example

A practical formulation of the water-paint according to the invention comprises a mixture of milk (10%), vinegar (6%) and linseed oil (1%) in which calcium hydroxide (72%), calcium sulphate (2%) and litophone (9%) are to be dispersed through centrifugation to obtain said water-paint.

## Claims

1. Ecological, multipurpose water-paint with bactericidal, fireproof, transpiring, isolating antioxidant, desalting properties suitable for manufactured building articles, wood, metals and plastics characterized by a milky emulsion (pasteurized whole milk or powdered milk), diluted in water; said emulsion is obtained through centrifugation starting from the following basic components (in weight percentage): 10-17% milk and 6-8% vinegar, comprising 6-15% acetic acid, adding 46-72% calcium hydroxide, 2-16% calcium sulphate or powdered stucco and 9-15% litophone through centrifuged dispersion.

2. Water-paint composition according to claim 1, characterized by the possibility of adding: 0,15% by volume of essential oils; 5 to 15% by weight of white cement and/or talc and/or silicon; pigments: 0,5 to 1% by volume of oxides and 3 to 6% by weight of dioxides and soil; 4 to 6% by weight of polysaccharides to increase the mechanical resistance and 1 to 3% by weight of addensing polysaccharides.

3. Stucco, mortar and bonding agents obtained by said water-paint, according to claim 1, adding through centrifugation: 1 to 3% in weight polyurethane products; 2 to 4% in weight polyacrylic products; 2 to 6% drying oils, 1 to 3% bleaching agents; 2 to 5% wood shavings; are particularly suitable for filling, finishing, restoring and coating walls, wood, metals and plastic materials.

4. A method of protecting a surface of a manufactured building articles, wood, metals and plastics which comprises the step of applying to said surface an effective amount of the ecological, multipurpose water-paint with bactericidal, fireproof, transpiring, isolating antioxidant, desalting properties according to claim 1.

## Patentansprüche

1. Ökologische, vielfach einsetzbare Wasserfarbe mit bakteriziden, feuerfesten, luftdurchlässigen, isolierenden, antioxidierenden, entsalzenden Eigenschaften, die für bauliche Manufakturware, Holz, Metalle und Kunststoffe geeignet ist, die durch eine im Wasser gelösten Milchemulsion kennzeichnet ist (pasteurisierte Milch oder Milchpulver); die genannte Emulsion wird durch Zentrifugierung mit den folgenden Grundkomponenten (im Gewichtsprozent) hergestellt: 10-17% Milch und 6-8% Essig; beinhaltet 6-15% Essigsäure; unter Zugabe von 46-72% Kalziumhydroxyd, 2-16% Kalziumsulfat oder Gipspulver und 9-15% Litophone durch Dispersion.

2. Wasserfarbezusammensetzung, nach Anspruch 1, ist durch die Möglichkeit das Folgende hinzuzufügen gekennzeichnet: 0,15% Vol. ätherische Öle; 5 bis 15% Gew. weißer Zement und/oder Talk und/oder Silikon; Pigmente: 0,5 bis 1% Vol. Oxide und 3 bis 6% Gew. Dioxyde und Erde; 4 bis 6% Gew. Polysaccaryde um den mechanischen Widerstand zu steigern und 1 bis 3% Gew. Verdickungsmittel Polysaccaryde.

3. Gips, Mörtel und Bindemittel hergestellt mit der genannten Wasserfarbe, nach Anspruch 1, unter Zugabe von: 1 bis 3% Gew. Polyurethane; 2 bis 4% Polyacryle; 2 bis 6% austrocknende Öle; 1 bis 3% Bleichmittel; 2 bis 5% Hobelspäne; sie sind besonders geeignet für die Füllung, Vollendung, Wiederherstellung und Überzug von Wänden, Holz, Metallen und Kunststoffen.

4. Eine Methode die Oberfläche von Manufackturwaren, Holz, Metallen und Kunststoffen zu schützen, welche das Auftragen auf die genannte Oberfläche einer wirksamen Menge der ökologischen, vielfach einsetzbare Wasserfarbe mit bakteriziden, feuerfesten, luftdurchlässigen, isolierenden, entsalzenden Eigenschaften, nach Anspruch 1, umfaßt.

## Revendications

1. Peinture à l'eau multi-usages écologique avec bactéricide, , ignifuge, transpirante, isolante, antioxidante, aux propriétés de dessalage appropriées aux articles pour la construction manufacturés, bois, métaux et plastiques caractérisée par une émulsion laiteuse (lait entier pasteurisé ou lait en poudre) diluée dans l'eau; telle émulsion est obtenue à travers la centrifugation à partir des componsants de base suivants (en pourcentage de poids): 10-17% lait et 6-8% vinaigre, comprenant 6-15% acide acétique, ajoutant 46-72% hydroxide de calcium, 2-16% sulphate de calcium ou stuc en poudre et 9-15% litophone à travers dispersion centrifugée.

2. Composition de peinture à l'eau selon revendication 1, caractérisée par la possibilité d'ajouter: 0,15% par volume d'huiles essentielles; de 5 à 15% par poids de ciment blanc et/ou talc et/ou silicium; pigmnts: de 0,5 à 1% par volume d'oxydes et de 3 à 6% par poids de dioxydes et de terre; de 4 à 6% par poids de polysaccharides pour augumenter la résistance mécanique et de 1 à 3% par poids de polysaccarides épaississants.

3. Stuc, mortier et agents liants obtenus avec la dite peinture à l'eau, selond revendication 1, en ajoutant à travers centrifugation: de 1 à 3% par poids de produits de polyuréthane; de 2 à 4% par poids de produits polyacriliques; de 2 à 6% d'huiles séchantes; de 1 à 3% d'agents blanchissants; de 2 à 5% de copeaux de bois; convinnent particuliérement au remplissage, finissage, rénovation et revêtement de parois, bois, métaux et matériaux plastiques.

4. Une méthode pour protéger une surface d'un article pour construction manufacturé, bois, métaux et plastiques, qui comprend les démarches d'application à la dite surface, une quantité effective de peinture à l'eau multi-usages écologique avec bactéricide, , ignifuge, transpirante, isolante, antioxidante, aux propriétés de dessalage selon reventidication 1.
